# EUROPEAN PATENT SPECIFICATION

(11) **EP 1 337 977 B1**
(45) Date of publication and mention of the grant of the patent: **30.04.2008**
(21) Application number: 01998943.3
(22) Date of filing: 21.11.2001
(51) Int. Cl.: G07D 7/12, G01J 3/50

(54) **OPTICAL METHOD AND APPARATUS FOR INSPECTING DOCUMENTS**
OPTISCHES VERFAHREN UND OPTISCHE VORRICHTUNG ZUM UNTERSUCHEN VON DOKUMENTEN
PROCEDE ET DISPOSITIF OPTIQUES D'INSPECTION DE DOCUMENTS

(30) Priority: 29.11.2000 GB 0029157
(43) Date of publication of application: 27.08.2003
(73) Proprietor: De La Rue International Limited, Basingstoke, Hampshire RG22 4BS (GB)
(72) Inventor: EVANS, Peter, Dilwyn, Emsworth, Hampshire PO10 7QR (GB); BROOKS, David, Alan, Waterlooville, Hampshire PO7 6SU (GB); SKINNER, John, Alan, Hants PO9 2QQ (GB); CALVERLEY, Simon, George, Hants PO8 9PJ (GB)
(74) Representative: Skone James, Robert Edmund
(86) International application number: PCT/GB2001/005143
(87) International publication number: WO 2002/045033

(56) References cited:
- EP-A- 0 314 312
- EP-A- 0 537 431
- EP-A- 0 537 513
- EP-A- 0 718 808
- WO-A-92/17857
- US-A- 4 204 765
- US-A- 5 870 487

## Description

The invention relates to methods and apparatus for obtaining information about documents, for example documents of value such as banknotes.

Document handling apparatus such as banknote counters, sorters and dispensers typically include a variety of detectors used to inspect banknotes as they are transported through the apparatus so as to determine certain characteristics of the banknotes such as authenticity and denomination. For example, it is common to inspect one or more of the reflection, fluorescent and transmission characteristics of documents when illuminated with light either in the visible or outside the visible range. The resultant, detected light is used to generate an image of the part of the document scanned and this is then compared with prestored images so as to determine denomination or other characteristics. However, these detection systems are expensive and complex requiring the use of a substantial number of illumination sources and detectors.

An example of apparatus for detecting the presence of an ink on a document is described in EP-A-0314312. In this case, an array of LEDs generate radiation beams of different wavelengths and these are modulated in respective different manners so that a single detector can be utilized, responsive to all the wavelengths, and from which information from each illuminating wavelength can be extracted. Typically, the modulations of the illuminating wavelengths will result in the banknote being illuminated by more than one wavelength at the same time in the same place.

EP-A-0537513 describes a banknote validator in which banknotes are passed over a pair of arrays of LEDs extending at right angles to the feed direction and which generate light at different wavelengths. Further LED arrays are provided above the banknote path. A CCD array is provided to detect light which has passed through or been reflected by the banknote.

EP-A-0718808 describes a document authentication system in which light from a set of LED arrays is reflected by a banknote and then sensed by a CCD sensor.

EP-A-0537431 discloses a similar arrangement of light generators and sensors.

WO-A-92/17857 describes a system for determining the width of a document by sequentially illuminating LEDs and detecting any illumination passing through a document by means of a strip photodiode.

In accordance with a first aspect of the present invention, a method of obtaining information about a document comprises transporting the document along a transport path; illuminating a plurality of portions of the document along a line transverse to the transport direction; and detecting light that has been transmitted through or reflected by the document so as to determine the response of the respective, different portions of the document to the illumination, characterized in that the plurality of portions are sequentially illuminated with light having the same wavelength; and in that light is detected using a common detector.

In accordance with a second aspect of the present invention, document inspection apparatus comprises a document transport system for transporting documents through a detector station; a linear array of separately activatable light sources at the detector station for illuminating corresponding portions of the document with light having the same wavelength; a detector for receiving light transmitted through or reflected by any of the illuminated portions of the document and for generating a corresponding output signal; and a control system for activating the light sources and monitoring the output signals from the detector, characterized in that said detector is common to said linear array of light sources; and in that the control system is adapted sequentially to activate the light sources.

We have developed a simpler method and apparatus which utilizes a common detector for receiving illumination from a series of portions of the document. By illuminating the portions in sequence, it is not necessary to have a separate detector corresponding to each portion since it will be known which portion of the document is being illuminated at any particular time and the response of the detector can be correlated with the relevant portion.

Typically, the common detector will comprise a photodiode such as a strip photodiode. An example of such a photodiode is described in US-A-5309515 in which a detector system is described determining the location of an edge of a document by monitoring light which has not been transmitted through the document.

The illumination wavelength would typically be outside the visible range, for example in the infra-red range but _could also be within the visible range. Furthermore, in some cases it is useful to illuminate different portions with different colours or wavelengths so as to characterize different features of the document. Thus, some parts of the document may be illuminated in the visible range and others outside the visible range and so the method can be implemented separately in each part and a second implementation of the apparatus provided.

Typically, more than one set of portions will be illuminated as the document is transported so that an image of at least part of the document can be built up. For example an image of a signature (eg on a bank book) or a picture or security feature on the document. Alternatively, the image may simply be an outline of the document, for example to enable the location of the edges of the document to be determined.

The portions may extend to an edge of the document or across the central region of the document. Furthermore, additional arrays of portions could be illuminated, each array being associated with its own common detector and in some cases a number of sets could be organized so that the entire width of the document transverse to the transport direction is illuminated.

Typically, the light sources will comprise light emitting diodes although other types of light source, for example laser diodes could be used.

The or each detector will typically comprise a photodiode.

It is also possible to calibrate the intensity and/or detection threshold for each separate light source to allow for dirt build up and uneven device specification by scanning the light sources when no document is present.

It will be appreciated from the above discussion that the invention results in a relatively low cost detector which can take less time to scan than conventional detectors and has a smaller size. This is because for size detection the pixel resolution is less, therefore there are fewer LEDs to scan, so it takes less time to complete a scan. Absolute resolution is obtained in software by interpolation. As a result the pattern image provided has a lower resolution than existing arrangements.

As mentioned above, the invention can be used in many different types of document handling apparatus including security document counters, sorters, dispensers, recirculators, validators, and acceptors (all with both long and short edge feed). It has particular relevance to the handling of banknotes and other documents of value such as travellers cheques but could also be used in conjunction with other types of document including elongate webs.

Some examples of methods and apparatus according to the invention will now be described with reference to the accompanying drawings, in which:-
Figure 1 is a schematic side view of part of one example of a document handling apparatus in which the detector is provided;
Figure 2 is a section on the line Y-Y in Figure 1;
Figure 3 is a side view of part of a second example;
Figure 4 is a section on the line X-X in Figure 3;
Figure 5 is a block diagram of the primary processing components; and,
Figure 6 is a view similar to Figure 1 but of a third example.

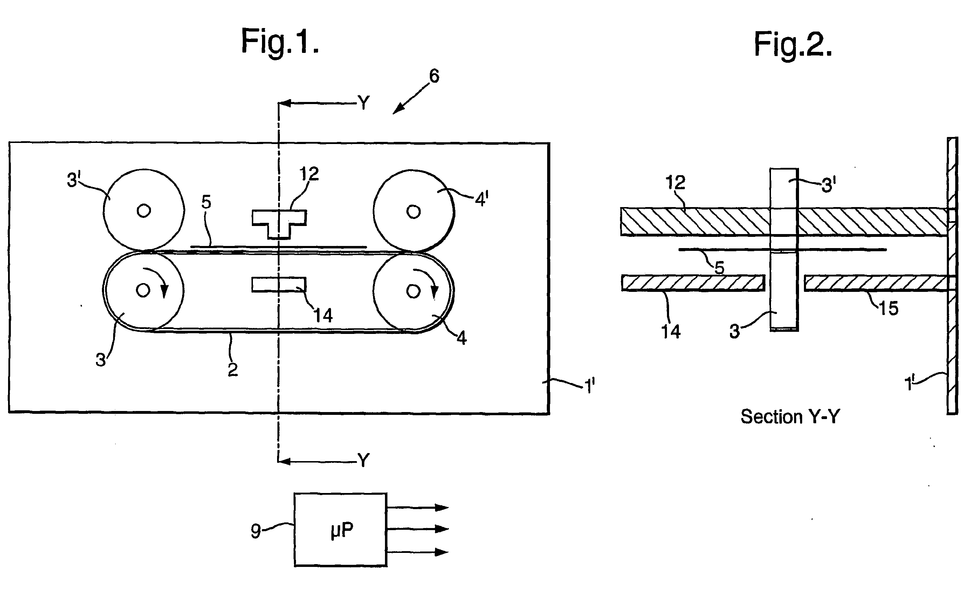

The apparatus shown in Figure 1 comprises a belt transport 1 mounted between side plates 1' (only one shown) and comprising a friction feed belt 2 entrained around rollers 3,4. The rollers 3,4 rotate in the direction of the arrows under the control of a motor (not shown) and cooperate with pinch rollers 3',4' so that a banknote 5 supplied from a source (not shown) is carried by the belt 2 through a detecting station 6.

The components of the detection station 6 are shown in more detail in Figure 2. Thus, the detector comprises a linear array of light emitting diodes (LEDs) 12. Each member of the array 12 is coupled with a driver which receives control signals from a microprocessor 9. As can be seen in Figure 2, the LED array 12 is located above the position of a banknote 5 being transported through the detector station 6.

Positioned below and in alignment with the array 12 are a pair of strip photodiodes 14,15. Each strip photodiode 14,15 has a single sensing region extending along its full length and so cannot by itself provide lateral resolution.

A filter (not shown) may be located in front of the strip photodiodes 14,15 so as to limit the light reaching the photodiodes to that which is to be detected.

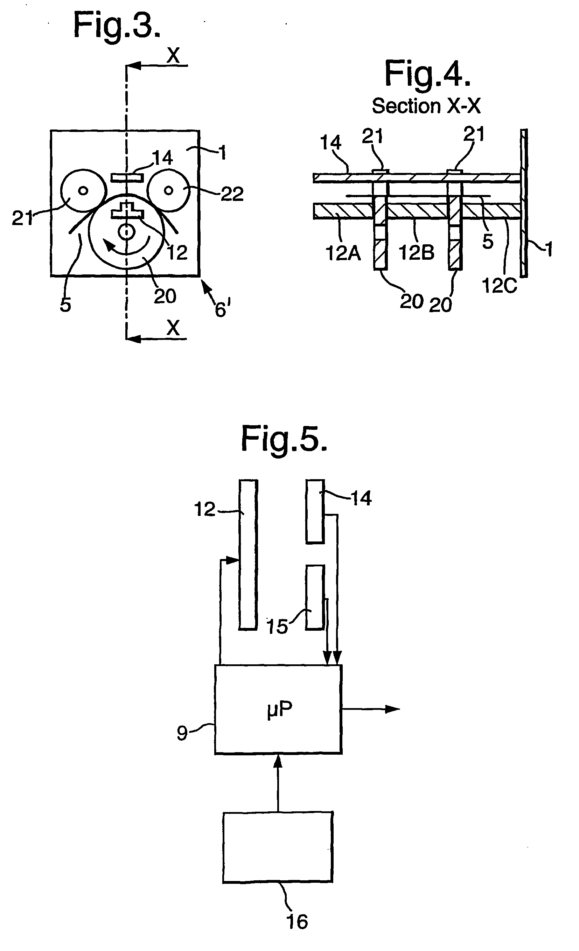

The control circuit is shown in Figure 5 where it can be seen that the microprocessor 9 is coupled to the LED array 12 and to the strip photodiodes 14,15. The microprocessor 9 is also connected with a memory 16. The microprocessor 9 will generate suitable output signals for controlling downstream processing of the banknotes. The action of these control signals will vary depending upon the equipment in which the apparatus is located. This may involve stopping the transport, controlling a diverter to feed the banknote to a particular location or output pocket and the like.

The construction and control of the LEDs can be similar to that described in US-A-5309515.

In use, banknotes 5 are conveyed through the detecting station 6 by the friction feed belt system 1. As the banknotes pass through the detecting station 6, the microprocessor 9 issues control signals to the LED driver so that the LEDs in the array 12 are illuminated in sequence. Typically, the LEDs will be illuminated in pairs, each LED of the pair corresponding to a different strip photodiode 14,15. Typically, they will be illuminated at a rate in the region 50-60 microseconds per LED (with a banknote feed speed being about 4 m/s. The LED current is controlled to provide an even illumination, the process being based on a previous calibration. The photodiode signal is further normalised by a process based on a more precise calibration. Each LED generates an infra-red beam with the same wavelength which passes to the corresponding strip photodiodes 14,15 either directly or through a portion of the banknote 5.

In this example, all the LEDs in the array 12 generate the same wavelength infrared beam. However, the array 12 could be broken down into two or more sub-arrays with all the LEDs in each sub-array generating the same wavelength but the wavelengths being different between the arrays.

The microprocessor 9 monitors the intensity of the signal received by the photodiodes 14,15 corresponding to each LED in the array 12 and stores the resultant intensity in respective locations in the memory 16. Lateral resolution is achieved because of the sequential illumination of the LEDs. That is, only two LEDs are on at any one time.

The LED array 12 is activated more than once so that a two-dimensional array of portions or pixels along each edge of the document are obtained (the note having been transported further between sampling intervals).

The microprocessor 9 then determines which pixels correspond to a portion of the document and which correspond to LEDs which did not overlie the document and ignores the latter "pixels" by discarding pixels whose intensity exceeds a threshold.

The remaining data which defines the intensity of infra-red light received through the document may then be further processed in a conventional manner and is then compared with one or more master pattern data sets stored in the memory 16. The comparison may be achieved using any conventional pattern comparison or recognition technique. In this way, the denomination and/or authenticity of the banknote 5 can be determined. In simple applications this may involve a comparison of one or more dimensions of the document with predetermined values. In more complex examples, a pattern or image on the document may be compared with predetermined patterns or images.

Having determined this aspect of the document, the microprocessor 9 then provides outputs to effect the operation of the document transport mechanism, the settings, for example mechanical positioning, thresholds etc. effecting the performance of other detectors or sensors within the document transport arrangement and/or communication means or indicating means (either internal to the document transport arrangement or externally of the document transport arrangement) based on the determined criteria.

Figures 3 and 4 illustrate an alternative structure for the detecting station 6 shown at 6'. The station 6' has a pair of driven rollers 20 which form nips with respective rollers 21,22 at spaced positions around their circumference. A banknote 5 enters through the nips defined by the rollers 20 and 21 and is guided into the nips defined between the rollers 20,22. A set of three LED arrays 12A-12C are located opposite a single strip photodiode 14.

The control system for the Figure 3 example will be similar to that shown in Figure 5 except that the microprocessor 9 will be connected individually to each of the LED arrays 12A,12B,12C. In operation, one LED in each one of these three arrays (i.e. three LEDs) will be illuminated at a time. The LEDs are in illuminated in sequence as before.

In other examples (not shown) more than one strip photodiode may be associated with a single LED array. The important factor is that a strip photodiode is illuminated only by a single LED at any one time.

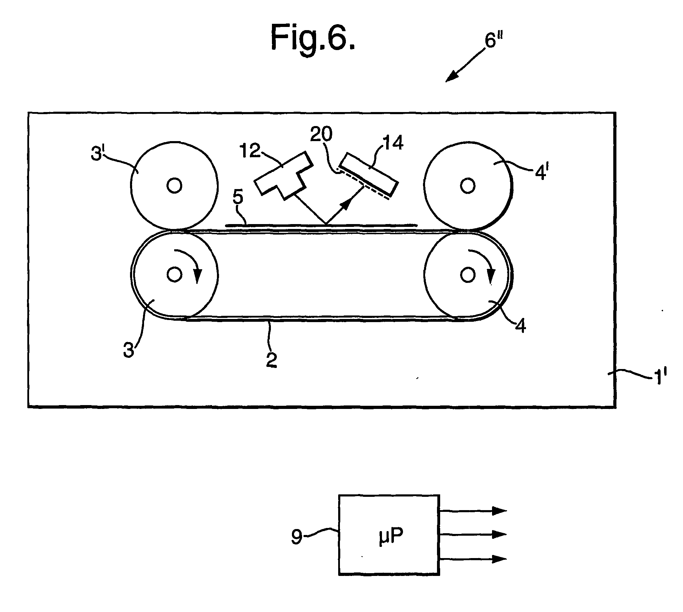

Further, these examples detect transmitted i.r. light. Other examples can instead detect reflected i.r. (or other wave lengths) light or indeed both transmitted and reflected by providing strip photodiodes on both sides of the document path. Thus, Figure 6 illustrates an example in which reflected i.r. radiation is detected. The construction of the detecting station 6" in this example is the same as Figure 1 except that the strip photodiodes 14,15 are mounted on the same side of the transport as the LED array 12. In addition a filter 20 is located in front of the photodiodes 14,15.

## Claims

1. A method of obtaining information about a document, the method comprising transporting the document along a transport path; illuminating a plurality of portions of the document along a line transverse to the transport direction; and detecting light that has been transmitted through or reflected by the document so as to determine the response of the respective, different portions of the document to the illumination, **characterized in that** the plurality of portions are sequentially illuminated with light having the same wavelength; and **in that** light is detected using a common detector (14,15) having a single sensing region that does not provide lateral resolution.

2. A method according to claim 1, wherein the illumination wavelength is outside the visible range.

3. A method according to claim 2, wherein the illumination wavelength is in the infrared range.

4. A method according to any of the preceding claims, wherein one plurality of the portions is illuminated with a different wavelength from another plurality of portions.

5. A method according to any of the preceding claims, further comprising storing the response in a memory (16).

6. A method according to -any of the preceding claims, further comprising repeating the illumination and detecting steps so as to determine the response of more than one array of portions.

7. A method according to any of the preceding claims, wherein the portions extend up to an edge of the document.

8. A method according to any of claims 1 to 6, wherein the portions extend across a central region of the document.

9. A method according to any of claims 1 to 6, wherein the portions extend across the full dimension of the document transverse to the transport direction.

10. A method according to any of the preceding claims, wherein the portions extend along a line substantially orthogonal to the transport direction.

11. A method according to any of the preceding claims, further comprising comparing the determined response with predetermined information; and processing the document thereafter in accordance with the result of the comparison.

12. A method according to claim 11 for handling documents of value such as banknotes, wherein the comparison step determines one or both of the value and authenticity of the document.

13. Document inspection apparatus comprising a document transport system (2-4) for transporting documents through a detector station (6); a linear array of separately activatable light sources (12) at the detector station (6) for illuminating corresponding portions of the document with light having the same wavelength; a detector (14,15) for receiving light transmitted through or reflected by any of the illuminated portions of the document and for generating a corresponding output signal; and a control system (9) for activating the light sources and monitoring the output signals from the detector, **characterized in that** said detector (14, 15) is common to said linear array of light sources (12) and has a single sensing region that does not provide lateral resolution; and **in that** the control system (9) is adapted to sequentially activate the light sources (12).

14. Apparatus according to claim 13, further comprising one or more further linear arrays (12) of separately activatable light sources at the detector station for illuminating corresponding portions of a document, each array cooperating with a respective detector common to that array for receiving light transmitted through or reflected by any of the portions of the document illuminated by that array.

15. Apparatus according to claim 13 or claim 14, wherein the light sources (12) comprise light emitting diodes.

16. Apparatus according to any of claims 13 to 15, wherein the or each detector (14,15) comprises a photodiode.

17. Apparatus according to any of claims 13 to 16, wherein the light sources (12) generate wavelengths outside the visible range.

18. Apparatus according to claim 17, wherein the light sources (12) generate wavelengths in the infrared range.

19. Apparatus according to any of claims 13 to 18, wherein one plurality of the light sources generates illumination at a different wavelength from another plurality of light sources.

20. Document inspection apparatus according to any of claims 13 to 19, further comprising a store (16) for storing predetermined data relating to the documents, wherein the control system (9) is adapted to compare output signals from the or each detector (14,15) with corresponding prestored data in the store (16) and to issue appropriate control signals determining the further processing of the documents.

21. Apparatus according to claim 20, wherein the predetermined data relates to the value and/or authenticity of documents of value.

22. A method according to claim 11 or claim 12, wherein the comparison step comprises comparing the determined response with one or more master response patterns defining the responses of each portion.

23. Apparatus according to claim 20 or claim 21, wherein the predetermined data comprises one or more master response patterns defining the responses of each portion.

## Patentansprüche

1. Verfahren zum Erhalten von Information über ein Dokument, wobei das Verfahren aufweist Transportieren des Dokuments entlang eines Transportpfades; Beleuchten einer Vielzahl von Bereichen des Dokuments entlang einer Linie quer zu der Transportrichtung; und Erfassen von Licht, das durch das Dokument hindurch getreten oder von ihm reflektiert worden ist, um so die Antwort der jeweiligen, unterschiedlichen Bereiche des Dokuments auf die Beleuchtung zu bestimmen, **dadurch gekennzeichnet, dass** die Vielzahl von Teilen nacheinander beleuchtet werden mit Licht derselben Wellenlänge; und das Licht erfasst wird unter Verwendung eines gemeinsamen Detektors (14, 15), der einen einzelnen Erfassungsbereich hat, der keine seitliche Auflösung liefert.

2. Verfahren nach Anspruch 1, worin die Beleuchtungswellenlänge außerhalb des sichtbaren Bereichs ist.

3. Verfahren nach Anspruch 2, worin die Beleuchtungswellenlänge im Infrarot-Bereich ist.

4. Verfahren nach einem der vorhergehenden Ansprüche, worin eine Vielzahl der Bereiche beleuchtet wird mit einer unterschiedlichen Wellenlänge gegenüber einer anderen Vielzahl von Bereichen.

5. Verfahren nach einem der vorhergehenden Ansprüche, weiter aufweisend das Speichern der Antwort in einem Speicher (16).

6. Verfahren nach einem der vorhergehenden Ansprüche, weiter aufweisend das Wiederholen der Beleuchtungs- und Erfassungsschritte, um so die Antwort von mehr als einem Feld von Bereichen zu bestimmen.

7. Verfahren nach einem der vorhergehenden Ansprüche, worin die Bereiche sich bis zu einer Kante des Dokuments erstrecken.

8. Verfahren nach einem der Ansprüche 1 bis 6, worin sich die Bereiche über einen mittleren Bereich des Dokuments erstrecken.

9. Verfahren nach einem der Ansprüche 1 bis 6, worin sich die Bereiche über die volle Dimension des Dokuments quer zur Transportrichtung erstrecken.

10. Verfahren nach einem der vorhergehenden Ansprüche, worin sich die Bereiche entlang einer Linie im Wesentlichen rechtwinklig zu der Transportrichtung erstrecken.

11. Verfahren nach einem der vorhergehenden Ansprüche, weiter aufweisend Vergleichen der bestimmten Antwort mit vorbestimmter Information; und Verarbeitung des Dokuments danach in Übereinstimmung mit dem Ergebnis des Vergleichs.

12. Verfahren nach Anspruch 11 zum Handhaben von Wertdokumenten, beispielsweise Banknoten, worin der Vergleichsschritt den Wert und/oder die Echtheit des Dokuments bestimmt.

13. Dokumentenuntersuchungsvorrichtung, die aufweist ein Dokumententransportsystem (2-4) zum Transportieren von Dokumenten durch eine Detektorstation (6); ein lineares Feld von getrennt aktivierbaren Lichtquellen (12) an der Detektorstation (6) zum Beleuchten entsprechender Teile des Dokuments mit Licht derselben Wellenlänge; einen Detektor (14, 15) zum Empfangen von Licht, das durch irgendeine der beleuchteten Teile des Dokuments hindurchgetreten oder von ihm reflektiert worden ist und zum Erzeugen eines entsprechenden Ausgangssignals; und ein Steuersystem (9) zum Aktivieren der Lichtquellen und Überwachen des Ausgangssignals von dem Detektor, **dadurch gekennzeichnet, dass** der Detektor (14, 15) dem linearen Feld von Lichtquellen (12) gemeinsam ist und einen einzelnen Erfassungsbereich hat, der keine seitliche Auflösung liefert; und dass das Kontrollsystem (9) geeignet ist, die Lichtquellen (12) sequentiell zu aktivieren.

14. Vorrichtung nach Anspruch 13 weiter aufweisend ein oder mehrere weitere lineare Felder (12) von getrennt aktivierbaren Lichtquellen an der Erfassungsstation zum Beleuchten entsprechender Bereiche eines Dokuments, wobei jedes Feld zusammen wirkt mit einem jeweiligen Detektor, der gemeinsam ist für dieses Feld zum Empfangen von Licht, das durch jeden der Teile des Dokuments hindurchgetreten oder von ihm reflektiert worden ist, die durch den Bereich beleuchtet sind.

15. Vorrichtung nach Anspruch 13 oder 14, worin die Lichtquelle (12) Licht aussendende Dioden aufweist.

16. Vorrichtung nach einem der Ansprüche 13 bis 15, worin der oder jeder Detektor (14, 15) eine Fotodiode aufweist.

17. Vorrichtung nach einem der Ansprüche 13 bis 16, worin die Lichtquellen (12) Wellenlängen außerhalb des sichtbaren Bereichs erzeugen.

18. Vorrichtung nach Anspruch 17, worin die Lichtquellen (12) Wellenlängen im Infrarot-Bereich erzeugen.

19. Vorrichtung nach einem der Ansprüche 13 bis 18, worin eine Vielzahl der Lichtquellen eine Beleuchtung mit unterschiedlichen Wellenlängen zu einer anderen Vielzahl von Lichtquellen erzeugt.

20. Dokumentenuntersuchungs-Vorrichtung nach einem der Ansprüche 13 bis 19 weiter aufweisend einen Speicher (16) zum Speichern vorbestimmter Daten, die sich auf die Dokumente beziehen, worin das Steuersystem (9) geeignet ist, Ausgangssignale von dem oder jedem Detektor (14, 15) zu vergleichen mit entsprechenden vorher gespeicherten Daten in dem Speicher (16) und geeignete Steuersignale auszugeben, die die weitere Bearbeitung der Dokumente bestimmen.

21. Vorrichtung nach Anspruch 20, worin sich die vorbestimmten Daten auf den Wert und/oder die Echtheit von Wertdokumenten beziehen.

22. Verfahren nach Anspruch 11 oder 12, worin der Vergleichsschritt aufweist das Vergleichen der bestimmten Antwort mit einem oder mehreren Master-Antwort-Mustern, die die Antworten eines jeden Bereichs definieren.

23. Vorrichtung nach Anspruch 20 oder 21, worin die vorbestimmten Daten ein oder mehrere Master-Antwort-Muster aufweisen, die die Antworten eines jeden Bereichs definieren.

## Revendications

1. Procédé d'obtention d'informations concernant un document, le procédé comprenant le transport du document le long d'un trajet de transport, l'éclairement d'une pluralité de parties du document le long d'une ligne transversale à la direction de transport, et la détection de la lumière qui a été transmise à travers ou reflétée par le document de façon à déterminer la réponse des différentes parties respectives du document à l'éclairement, **caractérisé en ce que** la pluralité de parties sont séquentiellement éclairées par la lumière présentant la même longueur d'onde, et **en ce que** la lumière est détectée en utilisant un détecteur commun (14, 15) comportant une seule région de détection qui n'offre pas une résolution latérale.

2. Procédé selon la revendication 1, dans lequel la longueur d'onde d'éclairement est en dehors de la plage visible.

3. Procédé selon la revendication 2, dans lequel la longueur d'onde d'éclairement se situe dans la plage infrarouge.

4. Procédé selon l'une quelconque des revendications précédentes, dans lequel une pluralité des parties est éclairée avec une longueur d'onde différente par rapport à l'autre pluralité de parties.

5. Procédé selon l'une quelconque des revendications précédentes, comprenant en outre la mémorisation de la réponse dans une mémoire (16).

6. Procédé selon l'une quelconque des revendications précédentes, comprenant en outre la répétition des étapes d'éclairement et de détection de façon à déterminer la réponse de plus d'un groupe de parties.

7. Procédé selon l'une quelconque des revendications précédentes, dans lequel les parties s'étendent jusqu'à un bord du document.

8. Procédé selon l'une quelconque des revendications 1 à 6, dans lequel les parties s'étendent en travers d'une région centrale du document.

9. Procédé selon l'une quelconque des revendications 1 à 6, dans lequel les parties s'étendent en travers de la dimension totale du document transversale à la direction de transport.

10. Procédé selon l'une quelconque des revendications précédentes, dans lequel les parties s'étendent le long d'une droite sensiblement orthogonale à la direction de transport.

11. Procédé selon l'une quelconque des revendications précédentes, comprenant en outre la comparaison de la réponse déterminée à des informations prédéterminées et le traitement du document après cela en fonction du résultat de la comparaison.

12. Procédé selon la revendication 11 destiné à gérer des documents de valeur tels que des billets de banque, dans lequel l'étape de comparaison détermine l'une ou bien les deux de la valeur et de l'authenticité du document.

13. Dispositif d'examen de documents comprenant un système de transport de documents (2 à 4) destiné à transporter des documents à travers une station de détection (6), un réseau linéaire de sources de lumière pouvant être activées séparément (12) au niveau de la station de détection (6) en vue d'éclairer des parties correspondantes du document avec de la lumière présentant la même longueur d'onde, un détecteur (14, 15) destiné à recevoir la lumière transmise à travers ou reflétée par l'une quelconque des parties éclairées du document et destiné à générer un signal de sortie correspondant, et un système de commande (9) destiné à activer les sources de lumière et à surveiller les signaux de sortie provenant du détecteur, **caractérisé en ce que** ledit détecteur (14, 15) est commun audit réseau linéaire de sources de lumière (12) et comporte une seule région de détection qui ne fournit pas une résolution latérale, et **en ce que** le système de commande (9) est conçu pour activer séquentiellement les sources de lumière (12).

14. Dispositif selon la revendication 13, comprenant en outre un ou plusieurs autres réseaux linéaires (12) de sources de lumière pouvant être activées séparément au niveau de la station de détection en vue d'éclairer les parties correspondantes d'un document, chaque réseau coopérant avec un détecteur respectif commun à ce réseau pour recevoir la lumière transmise à travers ou reflétée par l'une quelconque des parties du document éclairées par ce réseau.

15. Dispositif selon la revendication 13 ou la revendication 14, dans lequel les sources de lumière (12) comprennent des diodes électroluminescentes.

16. Dispositif selon l'une quelconque des revendications 13 à 15, dans lequel le ou chaque détecteur (14, 15) comprend une photodiode.

17. Dispositif selon l'une quelconque des revendications 13 à 16, dans lequel les sources de lumière (12) génèrent des longueurs d'onde en dehors de la plage visible.

18. Dispositif selon la revendication 17, dans lequel les sources de lumière (12) génèrent des longueurs d'onde dans la plage infrarouge.

19. Dispositif selon l'une quelconque des revendications 13 à 18, dans lequel une pluralité des sources de lumière génère un éclairement à une longueur d'onde différente par rapport à une autre pluralité de sources de lumière.

20. Dispositif d'examen de documents selon l'une quelconque des revendications 13 à 19, comprenant en outre une mémoire (16) destinée à mémoriser des données prédéterminées se rapportant aux documents, dans lequel le système de commande (9) est conçu pour comparer des signaux de sortie provenant du détecteur ou de chaque détecteur (14, 15) aux données prémémorisées correspondantes dans la mémoire (16) et pour délivrer des signaux de commande appropriés déterminant le traitement suivant des documents.

21. Dispositif selon la revendication 20, dans lequel les données prédéterminées se rapportent à la valeur et/ou l'authenticité des documents de valeur.

22. Procédé selon la revendication 11 ou la revendication 12, dans lequel l'étape de comparaison comprend la comparaison de la réponse déterminée à un ou plusieurs modèles de réponses maîtres définissant les réponses de chaque partie.

23. Dispositif selon la revendication 20 ou la revendication 21, dans lequel les données prédéterminées comprennent un ou plusieurs modèles de réponses maîtres définissant les réponses de chaque partie.
